# EUROPÄISCHE PATENTSCHRIFT

(11) **EP 0 986 815 B1**
(45) Veröffentlichungstag und Bekanntmachung des Hinweises auf die Patenterteilung: **13.03.2002**
(21) Anmeldenummer: 98936086.2
(22) Anmeldetag: 30.05.1998
(51) Int. Cl.: G11B 20/18, G11B 19/04, G11B 7/00, G11B 27/36, G11B 17/22

(54) **VERFAHREN UND VORRICHTUNG ZUM ÜBERPRÜFEN DER SICHERHEIT EINES DATENTRÄGERS**
METHOD AND DEVICE FOR TESTING THE SAFETY OF A DATA CARRIER
PROCEDE ET DISPOSITIF POUR CONTROLER LA SURETE D'UN SUPPORT DE DONNEES

(30) Priorität: 06.06.1997 DE 19723817
(43) Veröffentlichungstag der Anmeldung: 22.03.2000
(73) Patentinhaber: NSM Storage GmbH, 55411 Bingen (DE)
(72) Erfinder: FREITAG, Bernd, D-55288 Partenheim (DE); GÖRNER, Martin, D-55425 Waldalgesheim (DE); SCHELLONG, Horst, D-55129 Mainz (DE)
(74) Vertreter: Becker, Bernd, Dipl.-Ing.
(86) Internationale Anmeldenummer: DE9801506
(87) Internationale Veröffentlichungsnummer: WO9855997

(56) Entgegenhaltungen:
- EP-A- 0 726 570
- US-A- 5 233 584
- PATENT ABSTRACTS OF JAPAN vol. 098, no. 002, 30. Januar 1998 & JP 09 265713 A (TOSHIBA CORP), 7. Oktober 1997
- PATENT ABSTRACTS OF JAPAN vol. 098, no. 006, 30. April 1998 & JP 10 049421 A (TOSHIBA CORP), 20. Februar 1998
- PATENT ABSTRACTS OF JAPAN vol. 010, no. 162 (P-466), 10. Juni 1986 & JP 61 016033 A (MATSUSHITA DENKI SANGYO KK), 24. Januar 1986

## Beschreibung

Die vorliegende Erfindung betrifft ein Verfahren und eine Vorrichtung zum Überprüfen der Zuverlässigkeit eines Datenträgers.

Magnetische, optische oder magneto-optische Datenträger werden in zunehmendem Umfang zur langfristigen Aufbewahrung von Daten, insbesondere in digitaler Form, eingesetzt. Diese Datenträger unterliegen im Laufe ihres Gebrauchs allmählichen Veränderungen, z.B. durch Korrosion der informationstragenden Schicht, Erblinden von transparenten Schichten oder Oberflächen optisch ausgelesener Datenträger oder Abnutzung der Magnetschicht eines magnetischen Datenträgers wie etwa eines Magnetbandes, einer Floppy-Disk oder einer Festplatte durch wiederholtes Lesen, Entmagnetisierung von magnetischen Domänen im Laufe der Lagerung etc. Die Lebensdauer der Datenträger soll nach Angaben der Hersteller oft mehrere Jahrzehnte betragen. Dies bedeutet aber für den Verwender der Datenträger nicht, daß er sich während der angegebenen Lebensdauer auf die fehlerfreie Lesbarkeit der gespeicherten Daten verlassen kann. Zum einen beruhen die Angaben der Hersteller unvermeidlicherweise auf den extrapolierten Ergebnissen von beschleunigten Alterungsversuchen, die unter anderen Bedingungen durchgeführt werden als denen, unter denen die Datenträger praktisch eingesetzt werden, und sind dadurch mit einer gewissen Unsicherheit behaftet. Auch unsachgemäße Behandlung kann auf unvorhersehbare Weise die Lebensdauer verkürzen. Zum anderen ist die Lebensdauer der Datenträger eine Zufallsgröße; der Anwender kann daher niemals sicher sein, daß seine Datenträger bis zum Erreichen der angegebenen Lebensdauer einsetzbar sein werden. Fällt aber einer vorher aus, so kann der Schaden irreparabel sein.

Auf Seiten der Anwender besteht daher großer Bedarf nach einem Verfahren bzw. einer Vorrichtung, die es ermöglichen, den bevorstehenden Ausfall eines Datenträgers zu erkennen, solange die gespeicherten Daten noch vollständig vom betreffenden Datenträger rückgewonnen werden können.

Speziell für die Datenträgertypen CD und CDR sind Testgeräte bekannt, mit denen eine Vielzahl von für die Aufzeichnungsqualität und Lesbarkeit der CD oder CDR relevanten Parametern wie BLER, Jitter, Reflektivität, Pit Length und Land Length Error gemessen werden können. Um Alterungserscheinungen zu erkennen, müssen diese Parameter in regelmäßigen Zeitabständen gemessen werden. Diese Testgeräte sind hochspezialisiert und dementsprechend kostspielig. Um einen größeren Bestand von CDs oder CDRs zu überprüfen, müssen diese von Hand einem Lager entnommen und in das Testgerät eingelegt werden, was die Gegenwart einer Bedienungsperson Über einen langen Zeitraum erfordert.

Aus der EP-A-0 726 570 ist es bekannt, als Kriterium zur Überprüfung der Zuverlässigkeit eines Datenträgers die Fehlerrate zu verwenden. Beim Überschreiten einer gewissen Fehlerrate wird entschieden, daß der Datenträger nicht zuverlässig ist, woraufhin der Datenträger ersetzt wird.

Im weiteren ist es aus der US-A-5 233 584 bekannt, mehrfaches Lesen von Datenpaketen und Feststellen von dabei auftretenden Fehlern zur Beurteilung der Zuverlässigkeit eines Datenträgers zu verwenden.

Aufgabe der Erfindung ist, ein Verfahren und eine Vorrichtung anzugeben, die mit geringem apparativen Aufwand eine zuverlässige Überprüfung der Zuverlässigkeit von Datenträgern ermöglicht.

Die Aufgabe wird gemäß Anspruch 1 gelöst durch ein Verfahren mit folgenden Schritten:
a) lesen eines Datenpakets von vorgegebener Größe vom Datenträger,
b) feststellen, ob das Datenpaket fehlerfrei gelesen wurde, anhand einer Prüfinformation, und Abspeichern des Feststellungsergebnisses,
c) wiederholen der Schritte a) und b) für verschiedene Datenpakete des Datenträgers,
d) entscheiden, daß der Datenträger nicht zuverlässig ist, wenn anhand von in wenigstens einer zuvor erfolgten Anwendung des Verfahrens abgespeicherten Feststellungsergebnissen und der in Schritt b) der gegenwärtigen Anwendung abgespeicherten Feststellungsergebnisse erkannt wird, daß bei der gegenwärtigen Anwendung neue Fehler aufgetreten sind.

Die vorgegebene Größe des Datenpakets kann nach Zweckmäßigkeitsgesichtspunkten festgelegt werden. Bei vielen Datenträgerformaten ist die aufgezeichnete Information in Blöcke organisiert, und zu jedem Block ist eine bestimmte Zahl redundanter Bits mit auf dem Datenträger aufgezeichnet, die zusammen mit der aufgezeichneten Information gelesen werden und dazu dienen, Fehler beim Lesen der aufgezeichneten Information zu erkennen und zu korrigieren. In einem solchen Fall entspricht die vorgegebene Größe der Größe eines Blocks, und die redundanten Bits stellen die Prüfinformation dar. Das erfindungsgemäße Verfahren ist aber auch zur Überprüfung von Datenträgern mit redundanzfreien Aufzeichnungsformaten oder unabhängig vom Aufzeichnungsformat des Datenträgers anwendbar, wobei in einem solchen Fall die Prüfinformation zweckmäßigerweise aus der auf dem Datenträger aufzuzeichnenden Information oder der vom frisch in Betrieb genommenen Datenträger gelesenen Information nach einem bekannten Verfahren berechnet wird und auf einem zweiten Datenträger abgespeichert werden kann.

Die Entscheidung, ob ein Datenträger noch zuverlässig ist, stützt sich auf das folgende Kriterium. Dieses ist ein Vergleich der beim Lesen der Datenblöcke festgestellten Fehler mit den bei wenigstens einem früheren Lesevorgang festgestellten Fehlern. Zu diesem Zweck wird mit jeder Feststellung, ob das Datenpaket fehlerfrei gelesen wurde, ein Register inkrementiert, wenn festgestellt wurde, daß das Datenpaket nicht fehlerfrei gelesen wurde. Der wenigstens eine frühere Lesevorgang ist vorzugsweise der Lesevorgang der unmittelbar vorangehenden Anwendung des Verfahrens; zusätzlich kann mit den bei weiter zurückliegenden Lesevorgängen festgestellten Fehlern verglichen werden.

Vorzugsweise kann vorgesehen werden, daß zum vorzeitigen Erkennen des Alterns eines Datenträgers anhand des bei der gegenwärtigen Anwendung des Verfahrens erhaltenen Werts des Registers und der bei zwei oder mehr vorhergehenden Anwendungen erhaltenen Werte eine Tendenz der Fehlerzahl ermittelt wird und erkannt wird, daß neue Fehler aufgetreten sind, wenn diese Tendenz steigend ist.

Zur Lokalisierung von Fehlern kann das Abspeichern des Feststellungsergebnisses das Abspeichern einer Bezeichnung jedes Datenpakets umfassen, das nicht fehlerfrei gelesen wurde. Falls beispielsweise Datenpakete bestimmten Datenfeldern zugeordnet sind und die Datenfelder in verschiedene Kategorien eingestuft sind, kann eine Weiterverwendung des Datenträgers abhängig von fehlerbehafteten Datenfeldern und deren Kategorie bestimmt werden.

Für die Erkennung, ob neue Fehler aufgetreten sind, werden die bei der gegenwärtigen Anwendung des Verfahrens abgespeicherten Bezeichnungen der fehlerhaft gelesenen Datenpakete mit den Bezeichnungen zumindest einer vorhergehenden Anwendung fehlerhaft gelesenen Datenpakete verglichen, und es wird festgestellt, ob bei der gegenwärtigen Anwendung bislang fehlerfrei gelesene Datenpakete fehlerhaft gelesen wurden. Auf diese Weise kann bei hochwichtigen Daten festgestellt werden, daß ein Datenträgerdefekt überhaupt aufgetreten ist, und ggf. der Datenträger vorsorglich ausgetauscht werden. Gemäß einer Verfahrensvariante kann dann eine Inkrementierung des Registers für die Fehlerfeststellung erfolgen.

Zweckmäßig erfolgen die Prüfläufe in regelmäßigen Zeitabständen, vorzugsweise nachts. Dies kann durch automatische Durchprüfung des gesamten Datenträgerbestandes (z.B. eines Magazins) erfolgen, sofern auf die Datenträger beispielsweise über eine Wechseleinrichtung automatisch zugegriffen werden kann. Eine Fehler- oder Prüfanzeige kann mittels einer Schreibeinrichtung gegeben werden, diese aber auch in einem hierfür vorgesehenen Speicher abgelegt werden.

Die Aufgabe wird ferner gemäß Anspruch 12 gelöst durch eine Vorrichtung zur Durchführung des oben definierten Verfahrens, mit:
- einer Leseeinrichtung für die Datenträger,
- einer Prozessor einheit, die von einem Datenträger gelesene Datenpakete und Prüfinformation empfängt, feststellt, ob die Datenpakete fehlerfrei gelesen worden sind und entscheidet, ob der gelesene Datenträger zuverlässig ist, wobei die Prozessoreinheit zwei oder mehrere Sätze von Speicherelementen zum Abspeichern der Feststellungsergebnisse einer gegenwärtigen und wenigstens einer vorhergehenden Anwendung des Verfahrens umfaßt und Mittel, um festzustellen, ob bei der gegenwärtigen Anwendung des Verfahrens neue Fehler aufgetreten sind und
- einer Warneinrichtung, die ein Warnsignal ausgibt, wenn die Prozessoreinheit wegen des Auftretens neuer Fehler entscheidet, daß der gelesene Datenträger nicht zuverlässig ist.

Vorteilhafte Weiterentwicklungen des Verfahrens und der Vorrichtung sind in den abhängigen Ansprüchen definiert.

Weitere Merkmale und Vorteile der Erfindung ergeben sich aus der nachfolgenden Beschreibung von Ausführungsbeispielen anhand der beigefügten Figuren. Es zeigen:
- Fig. 1: eine schematische Darstellung einer erfindungsgemäßen Vorrichtung und
- Fig. 2: ein Flußdiagramm des erfindungsgemäßen Prüfverfahrens.

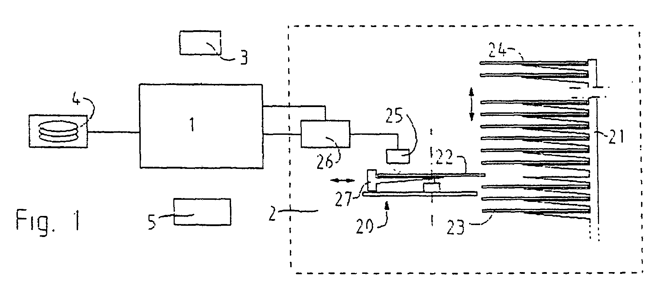

Die in Fig. 1 schematisch dargestellte Prüfvorrichtung umfaßt eine Prozessoreinheit 1, an die ein CD-Wechsler 2, eine Zeitschaltung 3, ein überschreibbarer Massenspeicher wie etwa ein Floppy- oder Festplattenlaufwerk 4 und ein Drucker 5 angeschlossen sind. Die Komponenten der Vorrichtung können an sich bekannte Komponenten eines Mikrocomputersystems sein und sind deshalb relativ preiswert.

Der CD-Wechsler umfaßt ein Magazin 21, das eine Anzahl von CDs oder CDRs (CD-ROMS) 23, 24 enthält. Das Magazin ist verschiebbar angeordnet, so daß auf einen Befehl der Prozessoreinheit hin eine ausgewählte CD vor einem Laufwerk 20 positioniert werden kann. Ein verschiebbarer Arm 27 des Laufwerks 20 kann diese CD 22 dem Magazin 21 entnehmen und auf einem Abspielteller plazieren, auf dem die CD von einem Lesekopf 25 abgetastet und die auf ihr gespeicherten Daten gelesen werden können. Die Daten werden in herkömmlicher Weise in Einheiten von 2336 Byte Länge gelesen, wobei jede Einheit einen Datenblock von 2048 Byte Länge und 288 Byte Prüfdaten umfaßt.

Eine Fehlerkorrekturschaltung 26 des CD-Wechslers 2 hat einen Dateneingang zum Empfang der vom Lesekopf erfaßten Daten, einen Steuereingang und einen Datenausgang, auf dem, je nachdem, ob am Steuereingang ein Aktivierungs- oder ein Deaktivierungssignal anliegt, ein anhand der Prüfdaten korrigierter Datenblock pro gelesener Einheit oder die unveränderte Dateneinheit ausgegeben wird. Derartige Fehlerkorrekturschaltungen sind bekannt und brauchen hier nicht genauer beschrieben zu werden. Der Steuereingang der Fehlerkorrekturschaltung 26 ist mit einem Ausgang der Prozessoreinheit 1 verbunden. Wenn die Vorrichtung als Mikrocomputersystem eingesetzt werden soll, aktiviert die Prozessoreinheit 1 die Korrekturschaltung über den Steuereingang. Bei der Durchführung des erfindungsgemäßen Verfahrens ist die Korrekturschaltung deaktiviert.

Die Zeitschaltung 3 gibt in regelmäßigen Zeitabständen in der Größenordnung von mehreren Tagen bis Monaten ein Signal an die Prozessoreinheit 1 aus, das diese veranlaßt, das erfindungsgemäße Prüfverfahren nacheinander an allen CDs im Magazin 21 oder nur an einzelnen, vom Anwender ausgewählten CDs auszuführen. Da die Durchmusterung einer größeren Zahl von CDs eine längere Zeit in Anspruch nehmen kann, in der die Prozessoreinheit nicht für andere Aufgaben zur Verfügung steht, erzeugt die Zeitschaltung zweckmäßigerweise das Signal nur nachts oder an arbeitsfreien Tagen.

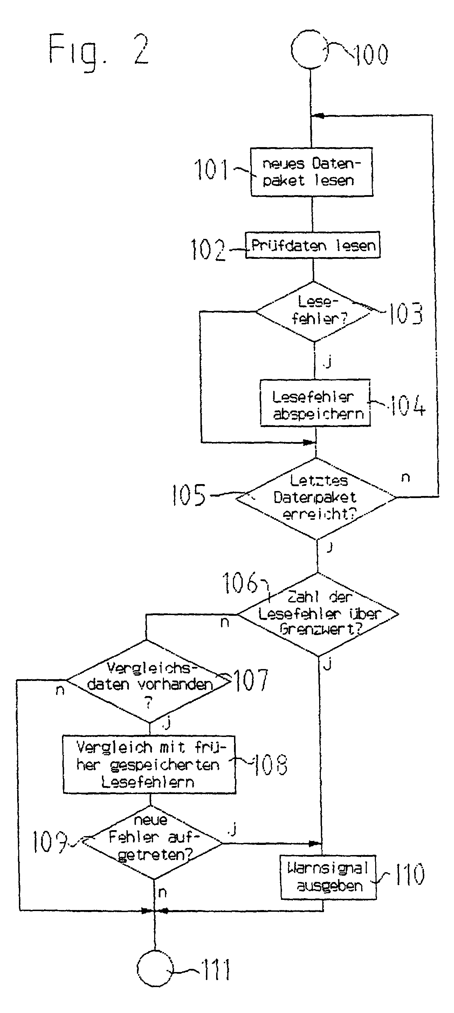

Nach Empfang des Signals weist die Prozessoreinheit 1 den CD-Wechsler 2 an, eine erste zu überprüfende CD 22 in das Laufwerk 20 einzulegen und führt an dieser das in Fig. 2 dargestellte Verfahren durch. Zu Beginn des Verfahrens (Schritt 100) steht das Laufwerk 20 am ersten Datenpaket der CD. Das Datenpaket und die zugehörigen Prüfdaten werden gelesen (Schritte 101, 102), und die Prozessoreinheit stellt anhand der Prüfdaten fest, ob das Datenpaket fehlerfrei gelesen wurde (Schritt 103). Zu diesem Zweck verwendbare Algorithmen sind allgemein bekannt. Ist ein Lesefehler aufgetreten, so wird dies von der Prozessoreinheit registriert (Schritt 104). Die Schritte 101 bis 104 werden der Reihe nach für sämtliche Datenpakete der CD durchgeführt.

Nachdem die CD vollständig gelesen ist, wird die Zahl der Lesefehler bestimmt (Schritt 106). überschreitet sie eine als noch tolerierbar angesehene Höchstzahl, so wird auf dem Drukker 5 ein Protokoll ausgegeben, anhand dessen eine Bedienungsperson die als unsicher erkannte CD identifizieren kann (Schritt 110), so daß sie ersetzt werden kann.

Ist die Zahl der Lesefehler kleiner als besagte Höchstzahl und sind keine Vergleichsdaten aus früheren Anwendungen des Verfahrens auf die betreffende CD vorhanden, so ist das Verfahren beendet. Liegen Vergleichsdaten vor und stellt die Prozessoreinheit beim Vergleich mit diesen Daten (Schritt 108) fest, daß bei der laufenden Anwendung des Verfahrens neue Fehler aufgetreten sind, so wird ebenfalls ein Protokoll auf dem Drucker ausgegeben. Andernfalls endet das Verfahren ohne Befund.

Anschließend wird die CD ins Magazin zurückbefördert, und sofern eine weitere zu überprüfende CD vorhanden ist, weist die Prozessoreinheit den CD-Wechsler an, diese ins Laufwerk 20 einzulegen.

Hinsichtlich der Art und Weise der Registrierung der Fehler und der Durchführung des Vergleichs (Schritte 104 und 108) gibt es eine Vielzahl von Varianten.

Eine einfache Lösung ist die, ein Register, das zu Beginn des Verfahrens auf 0 gesetzt wurde, bei jedem Auftreten eines Lesefehlers zu inkrementieren, so daß es nach dem Lesen der CD die gesamte Fehlerzahl enthält. Diese wird mit der Fehlerzahl verglichen, die bei der ersten Durchführung des Verfahrens festgestellt und abgespeichert wurde. Ist die im Register gespeicherte Fehlerzahl größer, so ist ein neuer Fehler hinzugekommen, und die entsprechende CD sollte ersetzt werden.

Lesefehler können nicht nur durch Veränderungen der Datenspeicherschicht der CD im Laufe des Gebrauchs verursacht werden, sie können auch dadurch vorprogrammiert sein, daß die CD infolge von Ungenauigkeiten bei der Herstellung oder beim Schreiben von Anfang an Bits enthält, die nicht eindeutig einem bestimmten digitalen Zustand zugeordnet werden können und vom Lesekopf mal als "0" und mal als "1" erfaßt werden. Bei einer solchen CD kann die Zahl der Lesefehler statistisch fluktuieren, ohne daß dies auf eine Verschlechterung der Speicherschicht hinweisen muß.

In einem solchen Fall ist eine zweite Lösung die, Schritt 104 so durchzuführen wie bei der o.g. ersten Lösung, wobei aber in den ersten n Anwendungen (z. B. n=10) des Verfahrens die erhaltenen Fehlerzahlen lediglich als Vergleichsdaten gesammelt werden. Erst ab der n+1 Anwendung wird in Schritt 107 entschieden, daß Vergleichsdaten vorliegen, mit denen die festgestellte Fehlerzahl verglichen werden kann. In Schritt 108 wird die festgestellte Fehlerzahl mit einem Grenzwert verglichen, der erhalten wurde durch Bilden des Mittelwerts der in den ersten n Anwendungen erhaltenen Fehlerzahlen und Hinzuaddieren eines Toleranzwerts, der z.B. das Zwei- oder Dreifache der Standardabweichung dieser ersten n Fehlerzahlen sein kann. überschreitet die im Register gespeicherte Fehlerzahl den Grenzwert, so wird entschieden, daß in signifikantem Umfang neue Fehler aufgetreten sein müssen.

Bei einer dritten Lösung wird Schritt 104 so durchgeführt wie bei der o.g. ersten Lösung, und bei den ersten n Anwendungen des Verfahrens werden Vergleichsdaten gesammelt. Ab der (n+1) -ten Anwendung wird in Schritt 108 in bekannter Weise nach der Methode der kleinsten Quadrate eine Ausgleichsgerade durch die Fehlerzahlen der letzten n Anwendungen und der gegenwärtigen Anwendung berechnet. Ergibt sich aus dieser Ausgleichsgerade eine Zunahme der Fehlerzahl pro Zeiteinheit, die einen vorgegebenen Grenzwert übersteigt, so wird entschieden, daß in signifikantem Umfang neue Fehler aufgetreten sein müssen.

Bei einer vierten Lösung wird in Schritt 104 nicht nur das Auftreten eines Lesefehlers registriert, sondern die Bezeichnung, z.B. eine laufende Nummer, des fehlerhaft gelesenen Blocks wird in einer Liste abgespeichert. Bei den ersten n Anwendungen des Verfahrens wird in Schritt 104 jedesmal überprüft, ob die Liste bereits die Bezeichnung des fehlerhaft gelesenen Blocks enthält, und falls nicht, wird die Liste um die betreffende Bezeichnung ergänzt, so daß nach n Anwendungen ein Vergleichsdatensatz in Form besagter Liste vorliegt, von dem angenommen werden kann, daß er alle Blöcke mit von Anfang an ungenau geschriebenen Bits enthält. Ab der (n+1)-ten Anwendung wird die Liste in Schritt 104 nicht mehr ergänzt, sondern es wird nur noch verglichen, ob die Bezeichnung eines fehlerhaft gelesenen Blocks in ihr enthalten ist, und falls nicht, so wird ein zu Beginn der Anwendung des Verfahrens auf 0 gesetztes Register inkrementiert. Diese Vorgehensweise erlaubt eine Unterscheidung zwischen in der CD von Anfang an angelegten und neu hinzugekommenen Lesefehlern; der Inhalt des Registers gibt in Schritt 108 die Zahl der letzteren an. Es genügt daher, in Schritt 108 den Registerinhalt mit einem fest vorgegebenen, Grenzwert zu vergleichen, um zu erkennen, ob die CD sicher ist oder nicht. Dieser Grenzwert kann wesentlich niedriger sein als der Toleranzwert bei der zweiten Lösung, so daß eine Erkennung von Veränderungen der CD bereits in einem wesentlich früheren Stadium möglich ist. Die bei dieser Lösung zu handhabende, möglicherweise recht umfangreiche Liste ist zweckmäßigerweise auf dem Massenspeicher 4 gespeichert.

Gemäß einer vorteilhaften Weiterentwicklung des Prüfverfahrens bzw. der Prüfvorrichtung sind zumindest einige der CDs 24 im Magazin 21 leere beschreibbare CDRs, und das Laufwerk 20 verfügt über einen Schreibkopf (nicht dargestellt). Diese Vorrichtung erlaubt es, auf die Feststellung hin, daß eine überprüfte CD unsicher ist, deren Inhalt zunächst auf den Massenspeicher 4 umzukopieren, eine leere beschreibbare CDR 24 in das Laufwerk 20 einzulegen und diese dann mit dem zwischengespeicherten Inhalt der unsicheren CD zu beschreiben, ohne daß hierfür eine Bedienungsperson tätig werden muß.

Die Erfindung ist zwar oben im Hinblick auf eine bevorzugte Anwendung zur Überprüfung von CDs und CDRs beschrieben, doch ist offensichtlich, daß sie, ggf. mit offensichtlichen apparativen Änderungen, auch auf die Überprüfung anderer Datenträger wie etwa Magnetplatten oder -bänder anwendbar ist.

Es kann auch beispielsweise alternativ zur obigen Beschreibung vorgesehen sein, bei deaktivierter Fehlerbehandlungsfunktion eine Überprüfung auf Lesefehler durch das betreffende Laufwerk durchzuführen, diese aber nicht nur zu berichtigen, sondern nur ihr Auftreten zu melden.

## Patentansprüche

1. Verfahren zum Überprüfen der Zuverlässigkeit eines Datenträgers, mit den Schritten:
a) Lesen eines Datenpakets von vorgegebener Größe vom Datenträger (101),
b) Feststellen, ob das Datenpaket fehlerfrei gelesen wurde, anhand einer Prüfinformation(102, 103), und Abspeichern des Feststellungsergebnisses (104),
c) Wiederholen der Schritte a) und b) für verschiedene Datenpakete des Datenträgers,
d) Entscheiden, daß der Datenträger nicht zuverlässig ist, wenn anhand von in wenigstens einer zuvor erfolgten Anwendung des Verfahrens abgespeicherten Feststellungsergebnissen und der in Schritt b) der gegenwärtigen Anwendung abgespeicherten Feststellungsergebnisse erkannt wird, daß bei der gegenwärtigen Anwendung neue Fehler aufgetreten sind (108, 109).

2. Verfahren nach Anspruch 1, bei dem die Prüfinformation zusammen mit dem zugehörigen Datenpaket von demselben Datenträger gelesen wird.

3. Verfahren nach Anspruch 1 oder 2, bei dem das Abspeichern des Feststellungsergebnisses das Inkrementieren eines Registers, wenn festgestellt wurde, daß das Datenpaket nicht fehlerfrei gelesen wurde, umfaßt.

4. Verfahren nach Anspruch 3, bei dem erkannt wird, daß neue Fehler aufgetreten sind, wenn der bei der gegenwärtigen Anwendung des Verfahrens erhaltene Wert des Registers den bei der vorhergehenden Anwendung erhaltenen um mehr als eine maximal zulässige Differenz überschreitet.

5. Verfahren nach Anspruch 3, bei dem anhand des bei der gegenwärtigen Anwendung des Verfahrens erhaltenen Werts des Registers und den bei zwei oder mehr vorhergehenden Anwendungen erhaltenen Werte eine Tendenz der Fehlerzahl ermittelt wird und erkannt wird, daß neue Fehler aufgetreten sind, wenn diese Tendenz steigend ist.

6. Verfahren nach einem der vorstehenden Ansprüche, bei dem das Abspeichern des Feststellungsergebnisses das Abspeichern einer Bezeichnung jedes Datenpakets umfaßt, das nicht fehlerfrei gelesen wurde.

7. Verfahren nach Anspruch 6, bei dem für die Erkennung, ob neue Fehler aufgetreten sind, die bei der gegenwärtigen Anwendung des Verfahrens abgespeicherten Bezeichnungen der fehlerhaft gelesenen Datenpakete mit den Bezeichnungen zumindest einer vorhergehenden Anwendung fehlerhaft gelesenen Datenpakete verglichen werden und festgestellt wird, ob bei der gegenwärtigen Anwendung bislang fehlerfrei gelesene Datenpakete fehlerhaft gelesen wurden.

8. Verfahren nach Anspruch 7 und einem der Ansprüche 3 bis 5, bei dem das Register nur inkrementiert wird, wenn der Vergleich der Bezeichnungen ergibt, daß das betreffende Datenpaket zumindest bei der einen vorhergehenden Anwendung fehlerfrei gelesen wurde.

9. Verfahren nach einem der vorstehenden Ansprüche, bei dem Schritte a) und b) so oft wiederholt werden, bis der ganze Datenträger gelesen ist.

10. Verfahren nach einem der vorstehenden Ansprüche, bei dem der Datenträger eine CD oder CD-ROM ist.

11. Verfahren nach einem der vorstehenden Ansprüche, bei dem die Daten des überprüften Datenträgers automatisch auf einen anderen Datenträger kopiert werden, wenn entschieden wird, daß der überprüfte Datenträger nicht zuverlässig ist.

12. Vorrichtung zur Durchführung des Verfahrens nach einem der Ansprüche 1 bis 10, mit
- einer Leseeinrichtung (2, 20) für die Datenträger (22, 23, 24),
- einer Prozessoreinheit (1), die von einem Datenträger (22) gelesene Datenpakete und Prüfinformation empfängt, feststellt, ob die Datenpakete fehlerfrei gelesen worden sind und entscheidet, ob der gelesene Datenträger (22) zuverlässig ist, wobei die Prozessoreinheit (1) zwei oder mehrere Sätze von Speicherelementen zum Abspeichern der Feststellungsergebnisse einer gegenwärtigen und wenigstens einer vorhergehenden Anwendung des Verfahrens umfaßt und Mittel, um festzustellen, ob bei der gegenwärtigen Anwendung des Verfahrens neue Fehler aufgetreten sind und
- einer Warneinrichtung (1, 5), die ein Warnsignal ausgibt, wenn die Prozessoreinheit (1) wegen des Auftretens neuer Fehler entscheidet, daß der gelesene Datenträger (22) nicht zuverlässig ist.

13. Vorrichtung nach Anspruch 12, mit einer Zeitsteuerschaltung (3), die die Prozessoreinheit (1) in regelmäßigen Zeitabständen, insbesondere zu arbeitsfreien Zeiten, veranlaßt, das Verfahren durchzuführen.

14. Vorrichtung nach den Ansprüchen 12 und 13, mit einem Datenträgermagazin (21) und einer Datenträgerwechseleinrichtung (2), die eingerichtet ist, um jeden im Magazin (21) befindlichen Datenträger (22, 23, 24) vom Magazin (21) in die Leseeinrichtung (20) und zurück zu befördern.

15. Vorrichtung nach den Ansprüchen 13 und 14, bei der die Zeitsteuerschaltung (3) die Prozessoreinheit (1) und die Datenträgerwechseleinrichtung (2) veranlaßt, das Verfahren an sämtlichen Datenträgern (22, 23, 24) im Magazin (21) durchzuführen.

16. Vorrichtung nach einem der Ansprüche 12 bis 15, bei der durch das Warnsignal eine Schreibeinrichtung aktiviert wird, um den Inhalt des als nicht sicher befundenen Datenträgers auf einen zweiten Datenträger umzukopieren.

## Claims

1. Method of checking the reliability of a data carrier, comprising the steps:
a) reading a data packet of prescribed size from the data carrier (101);
b) ascertaining whether the data packet has been accurately read, with reference to test information (102, 103), and storing the ascertained result (104);
c) repeating steps a) and b) for different data packets from the data carrier; and
d) deciding that the data carrier is not reliable when, with reference to ascertained results stored in at least one previously effected application of the method, and with reference to the ascertained results stored in step b) of the present application, it is acknowledged that new errors have occurred (108, 109) during the present application.

2. Method according to claim 1, in which the test information, together with the associated data packet, is read from the same data carrier.

3. Method according to claim 1 or 2, in which the storing of the ascertained result includes the incrementing of a register, when it has been ascertained that the data packet was not read accurately.

4. Method according to claim 3, in which it is acknowledged that new errors have occurred when the value of the register, obtained during the present application of the method, exceeds the value obtained during the previous application by more than a maximum permissible difference.

5. Method according to claim 3, in which, with reference to the value of the register obtained during the present application of the method, and with reference to the values obtained during two or more previous applications, a trend in the number of errors is determined, and it is acknowledged that new errors have occurred when this trend increases.

6. Method according to one of the preceding claims, in which the storing of the ascertained result includes the storing of a designation for each data packet which was not read accurately.

7. Method according to claim 6, in which, for detecting whether new errors have occurred, the designations for the inaccurately read data packets, stored during the present application of the method, are compared with the designations for at least one previous application of inaccurately read data packets, and it is ascertained whether, during the present application, data packets which were hitherto read accurately have been read inaccurately.

8. Method according to claim 7 and one of claims 3 to 5, in which the register is only incremented when the comparison of the designations shows that the pertinent data packet has been read accurately at least during one previous application.

9. Method according to one of the preceding claims, in which steps a) and b) are repeated as often as necessary until the whole data carrier is read.

10. Method according to one of the preceding claims, in which the data carrier is a CD or CD-ROM.

11. Method according to one of the preceding claims, in which the data of the checked data carrier are automatically copied onto another data carrier when it is decided that the checked data carrier is not reliable.

12. Apparatus for accomplishing the method according to one of claims 1 to 10, having
- a reading device (2, 20) for the data carriers (22, 23, 24);
- a processor unit (1), which receives data packets and test information read from a data carrier (22), ascertains whether the data packets have been read accurately, and decides whether the read data carrier (22) is reliable, the processor unit (1) including two or more sets of storage elements for storing the ascertained results of a present application and of at least one previous application of the method, and means to ascertain whether new errors have occurred during the present application of the method; and
- a warning device (1, 5), which issues a warning signal when the processor unit (1) decides that, because of the occurrence of new errors, the read data carrier (22) is not reliable.

13. Apparatus according to claim 12, having a time control circuit (3) which causes the processor unit (1) to accomplish the method at regular intervals of time, more especially at work-free times.

14. Apparatus according to claims 12 and 13, having a data carrier magazine (21) and a data carrier changing device (2) which is designed to convey each data carrier (22, 23, 24), situated in the magazine (21), from the magazine (21) to the reading device (20) and back.

15. Apparatus according to claims 13 and 14, in which the time control circuit (3) causes the processor unit (1) and the data carrier changing device (2) to accomplish the method on all of the data carriers (22, 23, 24) in the magazine (21).

16. Apparatus according to one of claims 12 to 15, in which a writing device is activated by the warning signal, in order to copy the contents of the data carrier, which has been found to be unsafe, onto a second data carrier.

## Revendications

1. Procédé de vérification de la fiabilité d'un support de données, comportant les étapes suivantes :
a) lire un paquet de données de taille prédéterminée du support de données (101),
b) détecter si le paquet de données a été lu sans défaut, à l'aide d'une information de vérification (102, 103), et mémoriser le résultat (104) de la détection,
c) répéter les étapes a) et b) pour différents paquets de données du support de données,
d) décider que le support de données n'est pas fiable, si à l'aide des résultats de détection mémorisés dans au moins une utilisation précédente du procédé, ainsi que des résultats de détection mémorisés au cours de l'étape b) de la présente application, il a été reconnu que des défauts nouveaux sont apparus lors de la présente utilisation (108, 109).

2. Procédé selon la revendication 1, dans lequel l'information de vérification est lue avec le paquet de données correspondant du même support de données.

3. Procédé selon la revendication 1 ou 2, dans lequel la mémorisation du résultat de détection comprend l'incrémentation d'un registre, s'il a été détecté que le paquet de données n'a pas été lu sans défaut.

4. Procédé selon la revendication 3, selon lequel on reconnaît que de nouveaux défauts sont apparus, si la valeur du registre, obtenue lors de la présente utilisation du procédé, est supérieure, de plus d'une différence maximale admissible, à la valeur obtenue lors de l'utilisation précédente.

5. Procédé selon la revendication 3, selon lequel, à l'aide de la valeur du registre obtenue lors de la présente utilisation du procédé et des valeurs obtenues lors de deux utilisations précédentes ou plus, on détermine une tendance du nombre de défauts et on reconnaît que de nouveaux défauts sont apparus lorsque cette tendance est croissante.

6. Procédé selon l'une des revendications précédentes, selon lequel la mémorisation du résultat de détection comprend la mémorisation d'une identification de chaque paquet de données qui n'a pas été lu sans défaut.

7. Procédé selon la revendication 6, selon lequel pour la reconnaissance de l'apparition de nouveaux défauts, les identifications des paquets de données lus avec défaut, mémorisées lors de la présente utilisation du procédé, sont comparées aux identifications de paquets de données lus avec défaut d'au moins une utilisation précédente, et il est détecté si lors de la présente utilisation, des paquets de données lus jusqu'alors sans défaut ont été lus avec défauts.

8. Procédé selon la revendication 7 et l'une des revendications 3 à 5, selon lequel le registre n'est incrémenté que si la comparaison des identifications montre que le paquet de données concerné a été lu sans défauts au moins lors d'une application utilisation.

9. Procédé selon l'une des revendications précédentes, dans lequel les étapes a) et b) sont répétées jusqu'à ce que tout le support de données soit lu.

10. Procédé selon l'une des revendications précédentes, selon lequel le support de données est un CD ou un CD-ROM.

11. Procédé selon l'une des revendications précédentes, selon lequel les données du support de données vérifié sont copiées automatiquement sur un autre support de données, s'il est décidé que le support de données vérifié n'est pas fiable.

12. Dispositif pour la mise en oeuvre du procédé selon l'une des revendications 1 à 10, comportant :
- un dispositif de lecture (2, 3) pour les supports de données (22, 23, 24),
- une unité à processeur (1) qui reçoit des paquets de données lus sur un support de données (22) et une information de vérification, détecte si les paquets de données ont été lus sans défaut et décide si le support de données (22) lu est fiable, l'unité à processeur (1) comprenant deux ensembles ou plus d'éléments de mémoire pour mémoriser des résultats de détection d'une utilisation présente et au moins d'une utilisation précédente du procédé, ainsi que des moyens pour détecter si de nouveaux défauts sont apparus lors de la présente utilisation du procédé, et
- un dispositif d'alarme (1, 5) qui produit un signal d'alarme lorsque l'unité à processeur (1) décide, à cause de l'apparition de nouveaux défauts, que le support de données (22) lu n'est pas fiable.

13. Dispositif selon la revendication 12, comportant une base de temps (3) qui incite l'unité à processeur (1) à mettre en oeuvre le procédé, à intervalles de temps réguliers, notamment à des heures où l'on ne travaille pas.

14. Dispositif selon les revendications 12 et 13, comportant un magasin de supports de données (21) et un dispositif de changement de support de données (2), qui est aménagé pour transporter tout support de données (22, 23, 24) se trouvant dans le magasin (21) depuis le magasin (21) jusqu'au dispositif de lecture (20) et inversement.

15. Dispositif selon les revendications 13 et 14, dans lequel la base de temps (3) incite l'unité à processeur (1) et le dispositif de changement de support de données (2) à mettre en oeuvre le procédé sur tous les supports de données (22, 23, 24) dans le magasin (21).

16. Dispositif selon l'une des revendications 12 à 15, dans lequel un dispositif d'enregistrement est activé par le signal d'alarme pour copier le contenu du support de données, constaté non sûr, sur un deuxième support de données.
